# EUROPÄISCHE PATENTSCHRIFT

(11) **EP 2 161 516 B1**
(45) Veröffentlichungstag und Bekanntmachung des Hinweises auf die Patenterteilung: **16.11.2011**
(21) Anmeldenummer: 08015495.8
(22) Anmeldetag: 03.09.2008
(51) Int. Cl.: F24J 2/07, F24J 2/38, F24J 2/40, G01J 1/42

(54) **Solarthermie-Anlage**
Solar thermal array
Installation d'héliothermie

(43) Veröffentlichungstag der Anmeldung: 10.03.2010
(60) Teilanmeldung: 11158331.6
(73) Patentinhaber: Novatec Solar GmbH, 76133 Karlsruhe (DE)
(72) Erfinder: Selig, Martin, 761357 Karlsruhe (DE); Mertins, Max, 79106 Freiburg (DE)
(74) Vertreter: Geitz Truckenmüller Lucht

(56) Entgegenhaltungen:
- WO-A-99/42765
- WO-A-2008/022409
- DE-A1- 4 241 133
- DE-A1- 10 056 070
- DE-A1- 10 238 202
- DE-A1- 10 322 001
- DE-A1-102006 058 995
- DE-U1- 9 209 439
- DE-U1-202007 012 891

## Beschreibung

Die vorliegende Erfindung betrifft eine Solarthermie-Anlage mit einer Vielzahl von Reflektoren, welche einfallendes Sonnenlicht auf einen erhöht gelagerten Receiver reflektieren, wobei der Receiver ein von einer Receiverabdeckung übergriffenes Receiverrohr aufweist und auf der Receiverabdeckung ein Messroboter zur Vermessung der Strahldichteverteilung des von den Reflektoren reflektierten Sonnenlichts im Bereich des Receiverrohrs angeordnet ist.

Eine derartige Solarthermie-Anlage ist bereits aus der DE 102 38 202 A1 vorbekannt. Dort ist ein Messroboter vorgesehen, welcher zur Vermessung der Strahldichteverteilung im Bereich des Receiverrohrs mithilfe eines Schlittens auf einem parallel zu dem Receiverrohr verlaufenden Traggestänge verfahrbar ist.

Ferner betrifft die vorliegende Erfindung eine Solarthermie-Anlage mit einer Vielzahl von Reflektoren, welche einfallendes Sonnenlicht auf einen erhöht gelagerten Receiver reflektieren, wobei die Reflektoren jeweils einen Primärreflektor zur Reflexion des einfallenden Lichtes auf den Receiver aufweisen.

Eine solche Solarthermie-Anlage ist aus der DE 10 2006 058 995 A1 bekannt. Hierbei ist eine Sonnennachführung der einzelnen Reflektoren mittels eines Schubgestänges vorgesehen, um eine korrekte Ausrichtung der einzelnen Reflektoren zu gewährleisten.

Im Wesentlichen besteht eine Solarthermie-Anlage aus einer Reihe von Reflektoren sowie einem Receiverrohr. Die Reflektoren sind derart in das einfallende Sonnenlicht gerichtet, dass dieses von den Reflektoren zurückgeworfen und auf den Receiver gebündelt wird. Bei dem Receiver handelt es sich um ein Rohr, welches von einem auf seiner den Reflektoren zugewandten Seite lichtdurchlässigen Gehäuse umgeben ist. In dem Rohr wird ein Medium geführt, welches sich durch das auf das Rohr fokussierte Sonnenlicht erhitzt. Aufgrund der so entstehenden Temperaturen kann mithilfe einer derartigen Anordnung Energie gewonnen werden. Dadurch, dass eine ganze Reihe von Reflektoren eingesetzt werden, welche das einfallende Sonnenlicht auf den Receiver bündeln, ist es notwendig, dass diese Reflektoren stets direkt auf das Receiverrohr ausgerichtet sind. Insbesondere deshalb, weil zur verbesserten Effizienz die Reflektoren dem Gang der Sonne nachgeführt werden müssen, ist eine exakte Einstellung und möglichst ideale optische Bedingungen für eine möglichst große Effizienz einer solchen Anlage erforderlich.

Insbesondere ist es problematisch, wenn - entweder durch ungenaue Ausrichtung oder durch ungenaue Nachführung - die einzelnen Reflektoren nicht optimal eingestellt sind oder wenn der Receiver verschmutzt und dadurch eine optimale Übertragung der Lichtenergie nicht erreicht werden kann. Im Bereich des Receivers, welcher unter anderem eine Abdeckung aufweist, welche innenseitig ebenfalls verspiegelt ist, so dass am Receiverrohr vorbeigeführtes Licht nochmals auf das Receiverrohr fokussiert wird, ist zum einen die Sauberkeit dieses Spiegels, zum anderen aber auch die Sauberkeit der das Receiverrohr in der Abdeckung einschließenden Glasscheibe, durch welche das Licht von den Reflektoren her auf das Receiverrohr fällt, essentiell wichtig.

Es ist in diesem Zusammenhang bekannt, einen Messroboter auf einem Gestell an einem Receiver zu befestigen, so dass dieser auf dem Gestell entlang des Receivers verfahrbar ist und so ortsabhängig die Einstrahlung von Solarenergie durch die Primärreflektoren auflösen kann. Problematisch ist hierbei jedoch, dass der fragliche Messroboter stets nur auf einem Receiver eingesetzt werden kann.

Daher liegt der vorliegenden Erfindung die Aufgabe zugrunde, eine Solarthermie-Anlage zu schaffen, welche einen hohen Wirkungsgrad gewährleistet und auch im Übrigen die Nachteile des Standes der Technik überwindet.

Dies gelingt durch eine Solarthermie-Anlage gemäß den Merkmalen des Hauptanspruchs sowie des nebengeordneten Anspruchs 6. Weitere sinnvolle Ausgestaltungen der Solarthermie-Anlage können den jeweiligen Unteransprüchen entnommen werden.

Erfindungsgemäß weist eine Solarthermie-Anlage einen Messroboter auf, welcher entlang des Receiverrohrs so eingerichtet werden kann, dass er die auf das Receiverrohr gerichtete Strahlung messen kann. Ein solcher Messroboter ist der Receiverabdeckung zugeordnet, auf welcher der Messroboter angeordnet sein kann, ohne dabei den Strahlengang zum Receiverrohr selbst zu behindern. Insbesondere ist der Messroboter dazu geeignet, die an dem Receiverrohr bzw. dem gesamten Receiver unmittelbar vorbeigeführte Einstrahlung zu erfassen und damit festzustellen, ob und welche der Reflektoren möglicherweise inkorrekt eingestellt sind. Ebenfalls kann ein entsprechender Messroboter dazu verwendet werden, eine Erstjustierung einer neu aufgestellten Solarthermie-Anlage vorzunehmen.

Im Betrieb ist der jeweilige Messroboter auf der Receiverabdeckung dadurch in deren Längserstreckung verfahrbar, dass der Messroboter mit einem Fahrwerk ausgestattet ist. Üblicherweise hat eine Receiverabdeckung eine mehrkantige Form, so dass eine definierte Fahrfläche für den Messroboter geschaffen ist. Mithilfe von seitlichen Stoppern und Führungselementen kann der Messroboter so auf einem Receiver angeordnet werden, dass dieser ohne Weiteres darauf verfahren werden kann. Insbesondere ist es dabei sinnvoll, wenn der Messroboter derart geformt ist, dass er den Receiver weitgehend formschlüssig umgreift, so dass ein Herabfallen des Messroboters bzw. ein Abwälzen desselben vom Receiver vermieden ist. Hierdurch ist gewährleistet, dass der Messroboter ohne Weiteres auch mehrere Receiver nacheinander abarbeiten kann.

Im Einzelnen weist ein solcher Messroboter wenigstens einen Messarm auf, welcher mit Fotozellen ausgestattet ist. Aufgrund des Ansprechens einzelner dieser Fotozellen an dem Messarm kann der Messroboter bestimmen, um wie weit ein Reflektor von dem Receiver als Ziel der reflektierten Sonneneinstrahlung abweicht. Durch eine lineare Anordnung der Fotozellen auf dem Messarm kann eine ortsaufgelöste Verteilung der auf den Receiver einfallenden Strahlung ermittelt werden.

In weiterer Ausgestaltung kann der Messarm am Messroboter schwenkbar angelenkt sein, so dass eine genauere Bestimmung der an dem Receiver vorbeigeführten Strahlen bzw. Strahlenbündel erfolgen kann. Zudem kann auf diese Art und Weise der Messarm bedarfsweise an den Messroboter angelegt werden, um diesen nach dem Einsatz in einer kompakten Transportform transportieren zu können. Soweit der Messroboter schwenkbare Messarme aufweist, ist für den Messroboter die Schwenkposition erfassbar, so dass diese bei einer Berechnung der Strahlendichteverteilung um den Receiver herum berücksichtigt werden kann. Um eine gleichzeitige Vermessung der auf beiden Seiten des Receivers angeordneten Reflektoren vorzunehmen, ist es ohne weiteres möglich, dem Messroboter Messarme beiderseits zuzuordnen.

Es ist in diesem Zusammenhang jedoch auch möglich, den wenigstens einen Schwenkarm unter den Receiver zu schwenken, so dass nicht die am Receiver vorbei gelenkte Strahlung, sondern die auf den Receiver eintreffende Strahlung gemessen werden kann.

Ergänzend oder Alternativ kann ein anderer Messroboter auf den Primärreflektoren der Reflektoren eingesetzt werden, der mit einem Neigungssensor ausgestattet ist. Dieser Messroboter erfasst die Neigung des Reflektors in Abhängigkeit von dem jeweiligen Ort, vorzugsweise mithilfe wenigstens eines Neigungssensors. Durch einen Soll-Istwertvergleich kann dann die Abweichung bestimmt und die Ausrichtung verbessert werden. Dies ermöglicht es, bisher lediglich stichprobenhaft ausgeführte Ausrichtungsmessungen flächendeckend auszuführen und vereinfacht so die Justageprozedur bei der Montage einer Solarthermie-Anlage und deren Genauigkeit.

Durch den Einsatz eines geeigneten Fahrwerks, vorzugsweise bestehend aus einer Mehrzahl von Flächenrädern zur Auflagerung des Messroboters auf dem Reflektor und einer Mehrzahl von Kantenrädern zur seitlichen Führung, kann der Messroboter weitgehend selbsttätig auf den Reflektoren verfahren werden und durch diese lediglich aufgesetzte Bauform auch ohne Weiteres von einem Reflektor zum nächsten, in Längsrichtung benachbarten Reflektor überwechseln.

Dabei kann eine Anpassung der Form des Messroboters auch an den Primärreflektor erfolgen, so dass auch ein ggf. selbsttätiges Verfahren des Messroboters auch entlang diesem möglich ist.

Dem Messroboter können hierbei auch gleich Mittel zur Justage des jeweiligen Primärreflektors zugeordnet werden, mit denen eine Feinjustierung desselben im Hinblick auf die Neigung, gegebenenfalls auch abschnittsweise, erfolgen kann.

Es ist durchaus möglich, einen Messroboter vorzusehen, welcher sowohl auf dem Receiver als auch auf dem Reflektor einsetzbar ist und ein oder mehrere hierfür geeignete Fahrwerke aufweist. In diesem Fall verfügt ein solcher Messroboter sowohl über Schwenkarme mit Fotozellen als auch über Neigungssensoren. Dies ermöglicht eine komplette Einstellung der Solarthermie-Anlage lediglich mit einem einzigen Messroboter.

Um ein möglichst eigenständig funktionierendes System zu schaffen, ist es sinnvoll, wenn der Messroboter ferngesteuert ist, wobei es insbesondere sinnvoll ist, wenn der Messroboter bei der Verrichtung seiner Messungen einer Programmierung folgt, welche ihn einen Receiver nach dem anderen bzw. einen Primärreflektor nach dem anderen selbsttätig abarbeiten lässt. Dabei ist es insbesondere sinnvoll, wenn der Messroboter von einem Zentralrechner aus oder von entsprechenden elektronischen Mitteln aus fernsteuerbar ist, wobei die Fernsteuerung mit besonderem Vorteil schnurlos, also insbesondere per Funk erfolgt. Auch eine Übermittlung der Messwerte an den Zentralrechner erfolgt per Funk.

Ein zweiter Aspekt, der ohne Weiteres auch losgelöst von den Messrobotern zur Verbesserung der Effizienz einer Solarthermie-Anlage einsetzbar ist, ist das Hinzufügen einer kontrollierten Be- und Entlüftung, welche über einen separaten Lüfter erfolgt. Um die Sauberkeit des Receivers zu gewährleisten ist das Receiverrohr üblicherweise in dem Bereich, wo Reflektoren das Sonnenlicht auf das Receiverrohr lenken, in einer von der Receiverabdeckung gebildeten Kavität aufgenommen, welche durch eine Glasscheibe reflektorseitig abgeschlossen ist. Hierdurch ist gewährleistet, dass der ebenfalls im Receiver aufgenommene Sekundärreflektor und das Receiverrohr nicht verstauben und ihre optischen Eigenschaften nicht beeinträchtigt werden. Zudem ist die Glasscheibe, welche die Kavität nach üblicherweise unten hin abschließt, auf diese Weise ebenfalls einigermaßen vor Verschmutzung geschützt. Allerdings verhält es sich so, dass die auf diese Weise im Receiver gebildete Kavität mit einem Gasgemisch, beispielsweise mit Luft, gefüllt ist und daher bei einer Erhitzung des Receivers sich ebenfalls erhitzt und ausdehnt. Nachdem es sich bei diesem Gasgemisch üblicherweise um Luft handelt, wird also eine Entlüftung des Receivers bei der Erhitzung stattfinden, während ein Zuströmen von Luft bei der Abkühlung erfolgt. Die zuströmende Luft kann jedoch Staub in die Kavität des Receivers eintragen, welcher von dort nur sehr schwierig entfernt werden kann und mit der Zeit die Glasscheibe, das Receiverrohr und den Sekundärreflektor verschmutzt. Daher ist erfindungsgemäß vorgesehen, die Kavität über ein Lüfterrohr zu Be- und Entlüften, wobei dem Lüfterrohr ein Luftfilter, vorzugsweise ein Feinstaubfilter, zugeordnet ist. Auf diese Weise kann kein Staub in das Innere der Kavität eindringen und die Glasscheibe bzw. das Receiverrohr verschmutzen.

In sinnvoller Weiterbildung kann dem Lüfterrohr auch ein Gebläse zugeordnet sein, welches den Luftstrom zum Be- und Entlüften kontrolliert.

Im Folgenden wird die vorstehend beschriebene Erfindung anhand eines Ausführungsbeispiels näher erläutert.

Es zeigen
- Fig. 1: eine Solarthermie-Anlage in einer sche- matischen Darstellung, welche den Re- ceiver und die Reflektoren quer schnei- det,
- Fig. 2: einen auf den Receiver aufgesetzten Messroboter in einer Querschnittsdar- stellung,
- Fig. 3: den Receiver in einer Detaildarstellung mit einem Lüfter mit Feinstaubfilter, sowie
- Fig. 4: einen Reflektor mit einem aufgesetzten Messroboter in einer perspektivischen Darstellung von schräg oben.

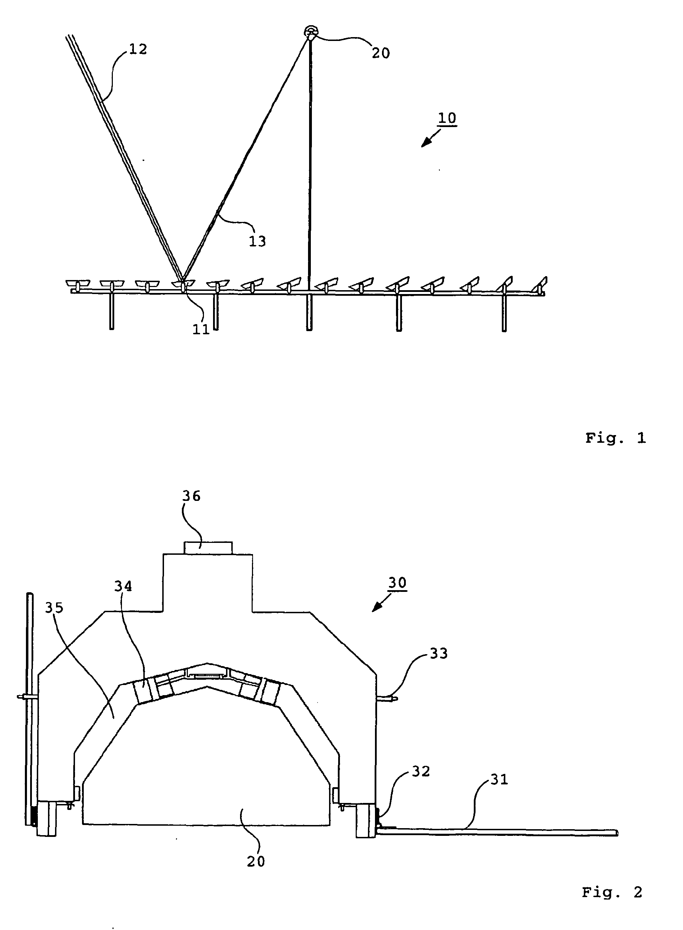

Figur 1 zeigt eine Solarthermie-Anlage 10, welche im Wesentlichen eine Reihe von Reflektoren 11 sowie einen Receiver 20 aufweist. Der Receiver 20 ist erhöht oberhalb der Reflektoren 11 angeordnet. Einfallendes Sonnenlicht 12 wird von den Reflektoren 11 gebündelt und auf den Receiver 20 gerichtet. Das auf den Receiver 20 treffende, reflektierte Sonnenlicht 13 erhitzt ein innerhalb des Receivers 20 geführtes Receiverrohr 22, in welchem ein Medium geführt wird, durch dessen Erhitzung innerhalb des Systems Energie erzeugt werden kann. Um zu gewährleisten, dass die Reflektoren 11 exakt auf den Receiver 20 ausgerichtet sind, kann der Solarthermie-Anlage 10 ein Messroboter 30 zugeordnet sein, welcher die Ausrichtung der automatisch nachgeführten Reflektoren 11 überprüft und gegebenenfalls aufgrund seiner Messwerte die Ausrichtung optimieren kann.

Figur 2 zeigt einen derartigen Messroboter 30, welcher auf einen Receiver 20 aufgesetzt ist. Der Messroboter 20 weist hierzu eine Aussparung 35 auf, welche der Form nach dem Receiver 20 angepasst ist. Durch ein Fahrwerk 34, welches dem Messroboter 30 zugeordnet ist, um auf dem Receiver 20 entlang seiner Längserstreckung verfahren werden zu können, wird ein gewisser Abstand zwischen Messroboter 30 und Receiver 20 gehalten. Der Messroboter 30 weist auf beiden Seiten jeweils einen Messarm 31 auf, der über ein Gelenk 32 schwenkbar an dem Messroboter 30 angeordnet ist. Aufgrund des Gelenks 32 kann der Messarm 31 in verschiedene Winkelpositionen gegenüber dem Messroboter 30 gebracht werden, so dass die an dem Receiver 20 vorbei gelenkte Strahlung, welche von den Reflektoren 11 reflektiert wird, erfasst und im Hinblick auf die Strahldichteverteilung vermessen werden kann. Alternativ kann der Messarm 31 auch zwischen Reflektoren 11 und Receiver 20 geschwenkt werden um nicht die vorbei gelenkte, sondern die auf den Receiver 20 einfallende Strahlung zu erfassen. Aufgrund der am Receiver 20 vorbeigeleiteten Strahlung können Einstellungsfehler der Reflektoren 11 aufgefunden und behoben werden. Auf diese Weise kann die Effizienz der Gesamtanordnung verbessert werden. Ein solcher Messarm 31 ist auf beiden Seiten des Messroboters 30 angeordnet, so dass gleichzeitig eine Messung der Reflektoren 11 auf beiden Seiten des Receivers 20 erfolgen kann. Um für den Transport nach dem Abnehmen des Messroboters 30 von dem Receiver 20 eine möglichst kompakte Bauform zu erreichen, ist der Messarm 31 jeweils mit einer Halterung 33 an den Seiten des Messroboters 30 fixierbar. Wird der Messroboter 30 auf einen Receiver 20 aufgesetzt, so ist der Messroboter 30 mithilfe des Fahrwerks 34 auf der Receiverabdeckung 21 verfahrbar. Dies kann entweder über eine Fernsteuerung erfolgen, wozu der Messroboter 30 eine Antenne 36 aufweist, ebenfalls ist es jedoch möglich, den Messroboter 30 mit einer Programmierung so auszustatten, dass dieser einen Receiver 20 vollständig selbsttätig ausmisst. Die Datenübertragung erfolgt dabei zwischen dem Messroboter 30 und einem zentral aufgestellten Zentralrechner und wird über die Antenne 36 per Funk abgewickelt.

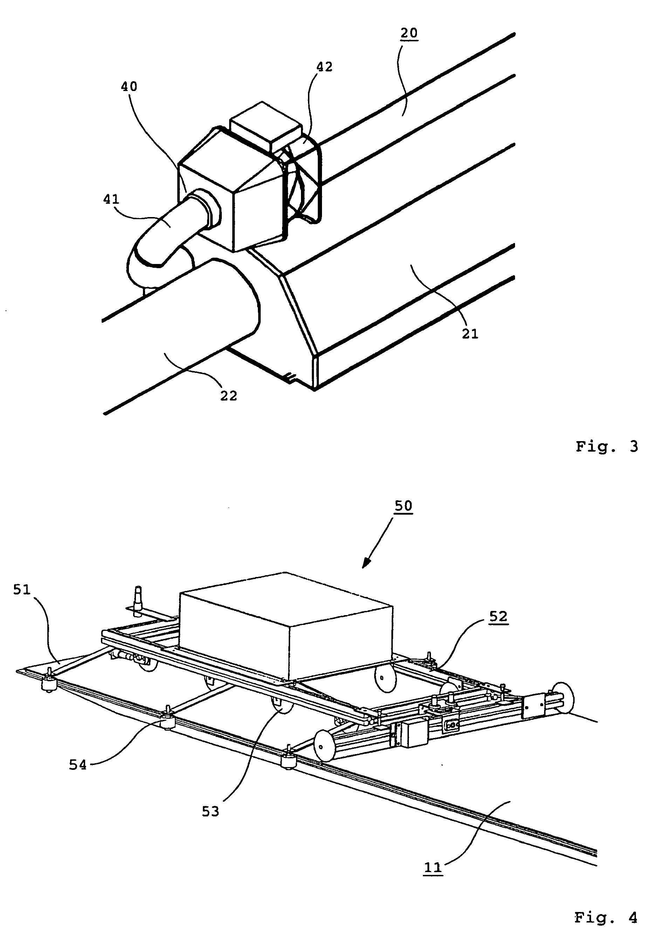

Figur 3 zeigt eine weitere Möglichkeit, die Effizienz einer Solarthermie-Anlage 1 zu erhöhen. Hierzu ist vorgesehen, die zwischen der Receiverabdeckung 21 und einer die Receiverabdeckung 21 unterseitig abschließenden Glasplatte gebildete Kavität komplett abzuschließen, so dass kein Staub eindringen kann. Die dadurch mit Luft gefüllte Kavität erhitzt sich jedoch durch die Sonneneinstrahlung, welche mithilfe der Reflektoren auf das innerhalb der Kavität verlaufende Receiverrohr 22 geleitet wird. Durch die Erhitzung dehnt sich die Luft aus und entweicht über entsprechend vorgesehene Entlüftungsöffnungen. Beim Abkühlen des Receiverrohrs 22 und damit auch der Luft innerhalb der Kavität wird wiederum Luft eingesaugt, welche jedoch Staubpartikel mit in das Innere des Receivers 20 hineintragen kann. Hierzu sind der Kavität ein Lüfterrohr 41 und ein Lüfter in Verbindung mit einem nicht näher gezeigten Feinstaubfilter zugeordnet, so dass zum einen der Zustrom mithilfe des Lüfters genau geregelt werden kann, zum anderen die in die Kavität einströmende Luft von Staub befreit werden kann. Hierdurch ist gewährleistet, dass der Receiver 20, insbesondere die den Receiver 20 nach unten abschließende Glasplatte, nicht durch den mit eingesaugten Staub verschmutzt sind.

Bei der Vermessung des Receivers wird ermittelt, ob das von den Reflektoren auf den Receiver geworfene Licht den Receiver trifft, und wie groß die entsprechende Strahlendichte entlang des Receivers und seiner unmittelbaren Umgebung ist. Jedoch muss für ein zielgenaues Auftreffen des reflektierten Lichtes auf den Receiver auch die Neigung des Reflektors den Vorgaben entsprechen. Ein Messroboter 50 gemäß Figur 4 ist daher auf einem Reflektor 11 aufgesetzt und mit einem Neigungssensor ausgerüstet, so dass der Messroboter 50 an jeder Stelle des Reflektors 11 entlang dessen Längserstreckung die Neigung desselben ermitteln kann. Gleichzeitig vergleicht er die Messwerte mit den an der jeweiligen Stelle vorgegebenen Neigung und kann mithilfe geeigneter Einstellmittel die Neigung des Reflektors 11 in der jeweiligen Lage anpassen. Es wird hierbei ebenfalls die aktuelle Zeit berücksichtigt, da die Reflektoren 11 dem Sonnenstand entsprechend nachgeführt werden und somit zu unterschiedlichen Zeitpunkten unterschiedliche Neigungsgrade erforderlich sind. Aufgrund des auch hier vorgesehenen Fahrwerks 52, welches mithilfe von Kantenrädern 54 und Flächenrädern 53 eine definierte Lage und Fahrtrichtung vorgibt, kann der Messroboter 50 auf dem Reflektor 11 verfahren werden. Diese lediglich aufgesetzte Bauform ermöglicht es zudem, dass in Längsrichtung benachbarte Reflektoren unter Überbrückung eines Abstandes durchgehend angefahren werden können, da eine Festlegung auf einen bestimmten Reflektor 11 durch entsprechende bauliche Maßnahmen wie Führungsschienen etc. nicht vorgesehen ist.

Vorstehend ist somit eine Solarthermie-Anlage beschrieben, welche dadurch wesentlich effizienter gemacht wird, dass eine Einstellung der Anlage durch einen Messroboter erfolgen kann, welcher die an dem Receiver vorbeigeleitete Sonneneinstrahlung und/oder die Neigung der Reflektoren messen kann und durch einen Vergleich mit den entsprechenden Sollwerten eine bessere und genauere Einstellung der Reflektoren mit deutlich verringertem Aufwand zulässt. Ferner ist eine Verbesserung der Effizienz dadurch möglich, dass mithilfe einer filtergestützten Lüftungsanlage ein Verstauben des Receivers vermieden wird.

### BEZUGSZEICHENLISTE

- 10: Solarthermie-Anlage
- 11: Reflektor
- 12: einfallendes Sonnenlicht
- 13: reflektiertes Sonnenlicht
- 20: Receiver
- 21: Receiverabdeckung
- 22: Receiverrohr
- 30: Messroboter
- 31: Messarm
- 32: Gelenk
- 33: Halterung
- 34: Fahrwerk
- 35: Aussparung
- 36: Antenne
- 40: Lüfterstutzen
- 41: Lüfterrohr
- 42: Gebläse
- 50: Messroboter
- 51: PrimärreFlektor
- 52: Fahrwerk
- 53: Flächenräder
- 54: Kantenräder

## Patentansprüche

1. Solarthermie-Anlage mit einer Vielzahl von Reflektoren (11), welche einfallendes Sonnenlicht (12) auf einen erhöht gelagerten Receiver (20) reflektieren, wobei der Receiver (20) ein von einer Receiverabdeckung (21) übergriffenes Receiverrohr (22) aufweist und auf der Receiverabdeckung (21) ein Messroboter (30) zur Vermessung der Strahldichteverteilung des von den Reflektoren (11) reflektierten Sonnenlichts (13) im Bereich des Receiverrohrs (22) angeordnet ist,
**dadurch gekennzeichnet, dass** der Messroboter (30) ein Fahrwerk (34) aufweist, mit dem er auf der Receiverabdeckung (21) aufgesetzt ist, wobei der Messroboter (30) in Längsrichtung der Receiverabdeckung (21) mittels des Fahrwerks (34) verfahrbar ist.

2. Solarthermie-Anlage gemäß Anspruch 1, **dadurch gekennzeichnet, dass** dem Messroboter (30) wenigstens ein Messarm (31) zugeordnet ist, welcher Fotozellen zur örtlichen Auflösung der Strahldichteverteilung aufweist.

3. Solarthermie-Anlage gemäß Anspruch 2, **dadurch gekennzeichnet, dass** der Messarm (31) dem Messroboter (30) schwenkbar angelenkt und die Schwenkposition von dem Messroboter (30) erfassbar ist.

4. Solarthermie-Anlage gemäß Anspruch 3, **dadurch gekennzeichnet, dass** der Messarm (31) in eine Position zwischen Receiver (20) und Reflektoren (11) verschwenkbar ist.

5. Solarthermie-Anlage gemäß Anspruch 2 bis 4, **dadurch gekennzeichnet, dass** dem Messroboter (30) jeweils zumindest ein Messarm (31) auf beiden Seiten zugeordnet ist.

6. Solarthermie-Anlage mit einer Vielzahl von Reflektoren (11), welche einfallendes Sonnenlicht (12) auf einen erhöht gelagerten Receiver (20) reflektieren, wobei die Reflektoren (11) jeweils einen Primärreflektor (51) zur Reflexion des einfallenden Lichtes auf den Receiver (20) aufweisen,
**dadurch gekennzeichnet, dass** auf dem Primärreflektor (51) ein Messroboter (50) zur Neigungserfassung des Reflektors (11) angeordnet ist, welcher mittels eines Fahrwerks (52) auf den Reflektoren (11) verfahrbar ist.

7. Solarthermie-Anlage gemäß Anspruch 6, **dadurch gekennzeichnet, dass** das Fahrwerk (52) durch jeweils eine Mehrzahl Flächenräder (53) zur Auflagerung des Messroboters (50) auf dem Primärreflektor (51) und Kantenräder (54) zur seitlichen Führung des Messroboters (50) in Längsrichtung des Reflektors (11) gebildet ist.

8. Solarthermie-Anlage gemäß Anspruch 6 oder 7, **dadurch gekennzeichnet, dass** der Messroboter (50) einen Neigungssensor zur Bestimmung der Neigung eines Primärreflektors (51) aufweist.

9. Solarthermie-Anlage gemäß Anspruch 8, **dadurch gekennzeichnet, dass** der Messroboter (50) Mittel zur, gegebenenfalls abschnittsweisen, Justierung des Primärreflektors im Hinblick auf seine Neigung aufweist.

10. Solarthermie-Anlage gemäß einem der vorhergehenden Ansprüche, **dadurch gekennzeichnet, dass** der Messroboter (30,50) die Receiverabdeckung (21) bzw. den Primärreflektor formschlüssig zumindest teilweise umgreift.

11. Solarthermie-Anlage gemäß einem der vorhergehenden Ansprüche, **dadurch gekennzeichnet, das** der Messroboter (30,50) ferngesteuert verfahrbar ist.

12. Solarthermie-Anlage gemäß einem der vorhergehenden Ansprüche, **dadurch gekennzeichnet, dass** der Messroboter (30,50) zur selbsttätigen Durchführung von Messreihen programmierbar ist.

13. Solarthermie-Anlage gemäß Anspruch 11 oder 12, **dadurch gekennzeichnet, dass** eine Datenübertragung zwischen einem Zentralrechner zur Erfassung von Daten und ggf. Fernsteuerung des Messroboters und dem Messroboter (30,50), vorzugsweise schnurlos, erfolgt.

14. Solarthermie-Anlage gemäß einem der Ansprüche 11 bis 13, **dadurch gekennzeichnet, dass** dem Messroboter (30,50) eine autarke Spannungsquelle, vorzugsweise ein Akkumulator zugeordnet ist.

15. Solarthermie-Anlage gemäß einem der vorhergehenden Ansprüche, **dadurch gekennzeichnet, dass** der Messroboter (30,50) Mittel zur Erfassung der relativen Längsverschiebung auf der Receiverabdeckung (21) bzw. der Primärreflektor (51) aufweist.

## Claims

1. A solar thermal energy system with a plurality of reflectors (11) which reflect incident sunlight (12) onto a receiver (20) mounted in an elevated manner, the receiver (20) having a receiver pipe (22) which is overlapped by a receiver cover (21), and a measuring robot (30) being disposed on the receiver cover (21) for measuring the beam density distribution of the sunlight (13) reflected by the reflectors (11) in the area of the receiver pipe (22), **characterized in that** the measuring robot (30) has a chassis (34) by means of which it is placed on the receiver cover (21), and **in that** the measuring robot (30) can be moved in the longitudinal direction of the receiver cover (21) by means of the chassis (34).

2. A solar thermal energy system according to claim 1, **characterized in that** the measuring robot (30) is associated with at least one measuring arm (31) which comprises photoelectric cells for local resolution of the radiance distribution.

3. A solar thermal energy system according to claim 2, **characterized in that** the measuring arm (31) is pivotably articulated onto the measuring robot (30), and the pivot position can be detected by the measuring robot (30).

4. A solar thermal energy system according to claim 3, **characterized in that** the measuring arm (31) can be pivoted into a position between receiver (20) and reflectors (11).

5. A solar thermal energy system according to claims 2 to 4, **characterized in that** at least one measuring arm (31) is respectively assigned to the measuring robot (30) on both sides.

6. A solar thermal energy system with a plurality of reflectors (11) which reflect incident sunlight (12) onto a receiver (20) mounted in an elevated manner, each reflector (11) having a primary reflector (51) for reflecting the incident light onto the receiver (20),
**characterized in that** a measuring robot (50) is disposed on the primary reflector (51) for detecting the inclination of the reflector (11), which measuring robot can be moved on the reflectors (11) by means of a chassis (52).

7. A solar thermal energy system according to claim 6, **characterized in that** the chassis (52) is respectively formed by means of a plurality of surface wheels (53) for mounting the measuring robot (50) on the primary reflector (51), and edge wheels (54) are formed for laterally guiding the measuring robot (50) in the longitudinal direction of the reflector (11).

8. A solar thermal energy system according to claim 6 or 7, **characterized in that** the measuring robot (50) has an inclination sensor for determining the inclination of a primary reflector (51).

9. A solar thermal energy system according to claim 8, **characterized in that** the measuring robot (50) comprises means for adjustment, if necessary section by section, of the primary reflector in regard to its inclination.

10. A solar thermal energy system according to one of the preceding claims, **characterized in that** the measuring robot (30, 50) at least partially encloses the receiver cover (21) or the primary collector with interlocking fit.

11. A solar thermal energy system according to one of the preceding claims, **characterized in that** the measuring robot (30, 50) can be moved in a remote-controlled manner.

12. A solar thermal energy system according to one of the preceding claims, **characterized in that** the measuring robot (30, 50) is programmable for automatic execution of measuring series.

13. A solar thermal energy system according to claim 11 or 12,
**characterized in that** data transmission takes place between the measuring robot (30, 50) and a central computer for acquisition of data and optionally remote control of the measuring robot, preferably in a wireless manner.

14. A solar thermal energy system according to one of claims 11 through 13, **characterized in that** an autonomous voltage source, preferably a rechargeable battery, is assigned to the measuring robot (30, 50).

15. A solar thermal energy system according to one of the preceding claims, **characterized in that** the measuring robot (30, 50) has means for detecting the relative longitudinal displacement on the receiver cover (21) or the primary reflector (51).

## Revendications

1. Installation de thermie solaire avec une multitude de réflecteurs (11), qui réfléchissent de la lumière solaire incidente (12) sur un récepteur (20) positionné en hauteur, le récepteur (20) ayant un tube récepteur (22) recouvert d'un couvercle de récepteur (21), et un robot de mesure (30) pour mesurer la répartition énergétique de la lumière solaire (13) réfléchie par les réflecteurs (11) dans la zone du tube récepteur (22) étant disposé sur le couvercle de récepteur (21)
**caractérisée en ce que** le robot de mesure (30) a un train de roulement (34), avec lequel il est posé sur le couvercle de récepteur (21), et que le robot de mesure (30) peut être déplacé dans le sens longitudinal du couvercle de récepteur (21) au moyen du train de roulement (34).

2. Installation de thermie solaire conformément à revendication 1, **caractérisée en ce qu'**au moins un bras palpeur (31) est associé au robot de mesure (30); ce bras présente des cellules photo-électriques pour la mesure locale de la répartition énergétique.

3. Installation de thermie solaire conformément à revendication 2, **caractérisée en ce que** le bras palpeur (31) est articulé au robot de mesure (30) de manière pivotable et que la position de pivotement peut être saisie par le robot de mesure (30).

4. Installation de thermie solaire conformément à revendication 3, **caractérisée en ce que** le bras palpeur (31) peut être pivoté dans une position entre le récepteur (20) et les réflecteurs (11).

5. Installation de thermie solaire conformément aux revendications 2 à 4, **caractérisée en ce qu'**au moins un bras palpeur (31) sur les deux côtés est associé au robot de mesure (30).

6. Installation de thermie solaire avec une multitude de réflecteurs (11), qui réfléchissent de la lumière solaire incidente (12) sur un récepteur (20) positionné en hauteur, chaque réflecteur (11) ayant un réflecteur primaire (51) pour réfléchir la lumière incidente sur le récepteur (20), **caractérisée en ce qu'**un robot de mesure (50) pour la détection de l'inclinaison du réflecteur (11) est disposé sur le réflecteur primaire (51), le robot pouvant être déplacé au moyen d'un train de roulement (52) sur les réflecteurs (11).

7. Installation de thermie solaire conformément à revendication 6, **caractérisée en ce que** le train de roulement (52) est formé par respectivement une majeure partie de roues de surface (53) pour l'appui du robot de mesure (50) sur le réflecteur primaire (51) et des roues de bord (54) pour le guidage latéral du robot de mesure (50) dans le sens de la longueur du réflecteur (11).

8. Installation de thermie solaire conformément à revendication 6 ou 7, **caractérisée en ce que** le robot de mesure (50) présente un capteur d'inclinaison pour déterminer l'inclinaison d'un réflecteur primaire (51).

9. Installation de thermie solaire conformément à revendication 8, **caractérisée en ce que** le robot de mesure (50) présente des moyens pour l'ajustage, le cas échéant par section, du réflecteur primaire en ce qui concerne son inclinaison.

10. Installation de thermie solaire conformément à l'une des revendications précédentes, **caractérisée en ce que** le robot de mesure (30, 50) enveloppe au moins en partie le couvercle de récepteur (21) et/ou le réflecteur primaire par complémentarité de forme.

11. Installation de thermie solaire conformément à l'une des revendications précédentes, **caractérisée en ce que** le robot de mesure (30, 50) peut être déplacé de manière téléguidée.

12. Installation de thermie solaire conformément à l'une des revendications précédentes, **caractérisée en ce que** le robot de mesure (30, 50) est programmable pour une réalisation autonome de séries de mesures.

13. Installation de thermie solaire conformément à revendication 11 ou 12, **caractérisée en ce qu'**une transmission de données entre un ordinateur central pour l'enregistrement de données et le cas échéant la commande à distance du robot de mesure et le robot de mesure (30, 50) s'effectue, préférentiellement sans fil.

14. Installation de thermie solaire conformément à l'une des revendications 11 à 13, **caractérisée en ce qu'**une source de tension en autarcie, préférentiellement un accumulateur, est associée au robot de mesure (30, 50).

15. Installation de thermie solaire conformément à l'une des revendications précédentes, **caractérisée en ce que** le robot de mesure (30, 50) dispose de moyens pour détecter le déplacement longitudinal relatif sur le couvercle de récepteur (21) et/ou le réflecteur primaire (51).
